# EUROPEAN PATENT SPECIFICATION

(11) **EP 0 778 977 B1**
(45) Date of publication and mention of the grant of the patent: **23.01.2002**
(21) Application number: 96921659.7
(22) Date of filing: 17.06.1996
(51) Int. Cl.: G11B 23/40, G03G 17/00, B41J 3/28

(54) **METHOD AND APPARATUS FOR WRITING AND LABELLING INDIVIDUAL DIGITAL DISCS**
VERFAHREN UND GERÄT ZUR BESCHRIFTIGUNG UND ETIKETTIERUNG EINZELNEN DIGITALPLATTEN
PROCEDE ET DISPOSITIF D'ENREGISTREMENT ET D'IMMATRICULATION DE DISQUES NUMERIQUES INDIVIDUELS

(30) Priority: 29.06.1995 US 640
(43) Date of publication of application: 18.06.1997
(73) Proprietor: EASTMAN KODAK COMPANY, Rochester, New York 14650 (US)
(72) Inventor: BUGNER, Douglas, E. c/o Eastman Kodak Company, Rochester, NY 14650-2201 (US); STAUDENMAYER, William, Joseph c/o Eastman Kodak Cy, Rochester, NY 14650-2201 (US); AMELL, Alfred, J. c/o Eastman Kodak Company, Rochester, NY 14650-2201 (US); MUELLER, William, James c/o Eastman Kodak Company, Rochester, NY 14650-2201 (US)
(74) Representative: Buff, Michel
(86) International application number: US9610476
(87) International publication number: WO9701844

(56) References cited:
- EP-A- 0 017 700
- EP-A- 0 297 668
- DE-A- 3 842 149
- GB-A- 2 200 493
- GB-A- 2 259 685

## Description

### Field Of The Invention

The invention relates to digital discs and methods and apparatus for writing and labelling digital discs and more particularly relates to methods and apparatus for individually writing and labelling digital discs.

### Background Of The Invention

Optical storage media, and particularly the optical disc, is finding increasing use in the high density storage of digital information, such as digitized music, digitized photographs, and computer programs. At present, three principal types of optical storage media are in common use.

The first type, referred to as a CD or ROM (read only memory) disc, is manufactured by pressing depressions into a substrate, in a manner analogous to the manufacture of phonograph records. This type of optical disc has shortcomings similar to those of phonograph records. Prepared recordings must be warehoused until needed and small production runs are subject to an economic disincentive.

A second type of optical storage media, commonly referred to as a writable optical storage disc, has the capability of having information recorded (written) thereon at some time after fabrication of the medium. A third type can also have information added after fabrication, but that information can be erased or modified at a later time. The latter two types of optical storage media lend themselves to small production runs and "on demand" preparation.

The ease of preparation of writable and erasable optical storage discs in combination with an elimination of physical storage requirements, suggests their use as a replacement for ROM discs. There is a need, however, for efficient means for writing and labelling digital discs on an individual basis.

GB-A-2 259 685 describes a method for writing and labeling digital discs wherein a label file group has digitized information to print the label information on a label applied to the digital disc. A program file group has digitized program information that is used to store the information which has to be written on the disc. In that document the label file group and the program file group are independent data, consequently errors could occur.

Lock-step between the controller, writer and printer is not desired because writing is much slower than printing.

EP-A-0 297 668 discloses a method for labeling a Compact Disc wherein the label information are directly printed onto the disc.

It would thus be desirable to provide an apparatus and method for writing and labeling individual digital discs.

It is also desirable to have digital file group information easily accessible from the digital. disc.

### Summary Of The Invention

The invention provides methods and apparatus for writing and labelling digital discs as defined by claims 1 and 2. In a method of the invention, a digital file group is allocated to a digital disc. The digital file group has a program file group and a label file group. The program file group has digitized program information and control information necessary to write the program information to the digital disc. The label file group has digitized label information and control information necessary to print the label information on the digital disc. The digital file group is written on the digital disc. The writing is modulated by the program file group. The digital disc is printed. The printing is modulated by the label file group from the digital file group written on the digital disc.

It is an advantageous effect of the invention that apparatus and method are provided for writing and labelling individual digital discs.

### Brief Description Of The Figures

The invention itself will be better understood by reference to the following description of an embodiment of the invention taken in conjunction with the accompanying figures wherein:
Figure 1 is a diagrammatical view of an embodiment of the method of the invention.
Figure 2 is a diagrammatical view of another embodiment of the method of the invention.
Figure 3 is a diagrammatical view of a digital file group of the methods of Figures 1 and 2.
Figure 4 is a diagrammatical view of an embodiment of the apparatus of the invention.
Figure 5 is a diagrammatical view of another embodiment of the apparatus of the invention.

### Description Of Particular Embodiments

The methods and apparatus of the invention are directed to the preparation of written and labelled digital discs on an individual basis from blank, unlabelled discs. In a particular embodiment of the invention, the digital disc is a writable optical disc. In this type of optical storage disc, the data can be written on the disc after the disc is fabricated. The following discussion will refer predominantly to the method, however, the features of the methods and apparatus of the invention will be readily apparent from this discussion.

In the invention, a digital file group 10 including program and label information is allocated (100) to a digital disc 11. After allocation, the program information is transmitted to a writer 13 which then writes (102) the program information on the digital disc 11 and the label information is transmitted to a printer 15 which then directly prints (104) the label information on the face 17 of the digital disc 11.

The term "file group" is used herein to refer to both individual computer files and groups of files having a common or collective function. The digital file group 10 has a program file group and a label file group. The program file group includes digitized program information and control information necessary to write the program information to the digital disc. The label file group includes digitized label information, and control information necessary to print the label information directly on the digital disc.

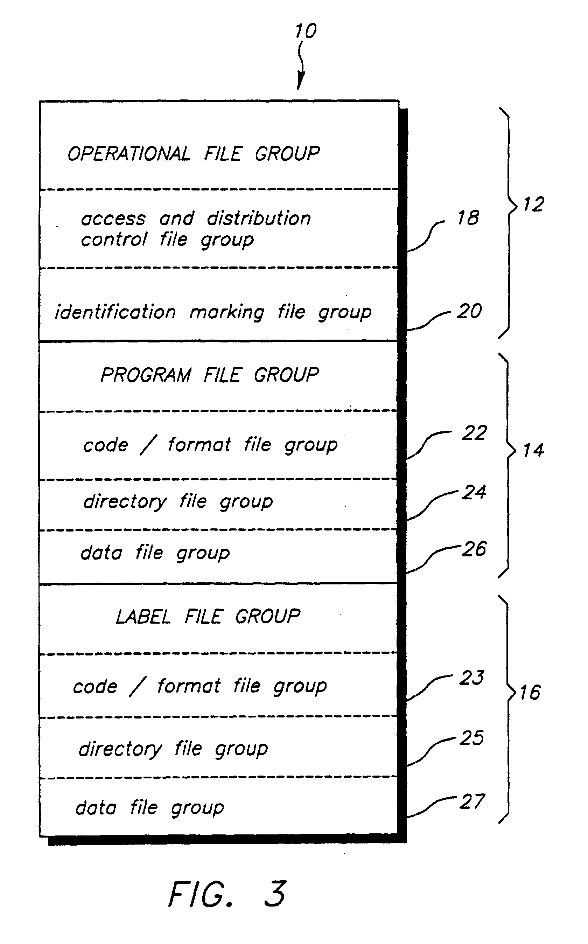

Fig. 3 illustrates a more specific example of the digital file group 10 for a particular embodiment of the invention. The file group 10 includes an operational file group 12, a program file group 14 and a label file group 16. The operational file group 12 includes an access and distribution control file group 18 and an identification marking file group 20. The access and distribution control file group 18 provides functions related to initialization or preparation and distribution of appropriate file groups to the writer and printer. The identification marking file group 20 provides functions related to accessing an identification marking on a digital disc (an embodiment of the invention utilizing this function is discussed below). The program and label file groups 14,16 each include a code/format file group 22,23 a directory file group 24,25 and a data file group 26,27, all respectively. The code/format file group 22,23 includes information necessary to configure the writer or printer to recognize the respective data file group 26 or 27, while the directory file group 24,25 identifies individual files within the respective data file group 26 or 27. The data file groups 26,27 are the program information and label information written by the writer and printed by the printer, respectively.

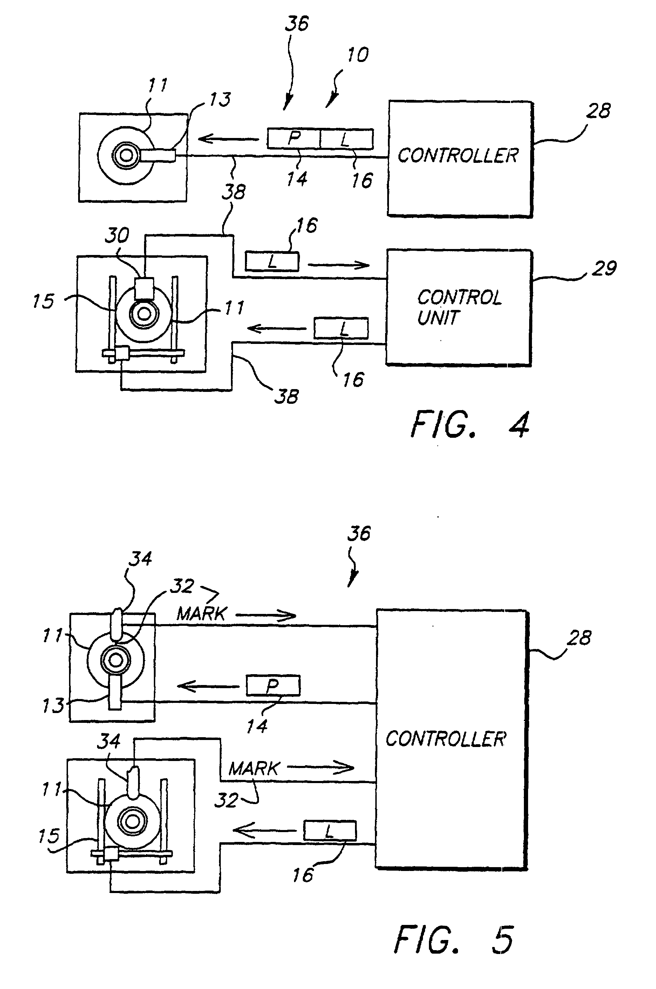

Referring now particularly to Figs. 4-5, the digital file group initially resides in a controller 28. A convenient controller 28 includes a programmable digital microprocessor and a file store (not separately illustrated). The file store can be any of a wide variety of digital storage media, for example a conventional hard disc or hard disc storage system, or a multiple disc "juke box" of erasable optical discs. The file store in combination with the microprocessor can comprise an appropriately configured microcomputer. The file store may represent a permanent storehouse for the digital file groups or can be a temporary buffer that is downloaded with a digital file group when needed. In the latter case, all of the digital file groups can be stored in a "main storehouse", a mainframe computer or the like. Another alternative is an intermediate position in which some digital file groups are present in the file store and other groups are retained on a main storehouse until requested by the apparatus of the invention in response to user demand.

The digital file groups 10 can be supplied to the controller in a variety of ways. For example, the file store can include means for communicating with a main storehouse for regular or intermittent transfers of digital file groups. A telecommunications link to the main storehouse is considered most convenient, however, communication could be provided, for example, by physical transmission of digital media. For example, the media used in the file store could be physically replaced periodically. In a particular embodiment of the invention, separately supplied digitized program information, digitized label information, and control information are associated by the controller into a single digital file group. The different parts of the digital file group can be provided from different sources.

In the allocation of the digital file group to the digital disc, there is an interaction between the controller and the components that write the program information and print the label information. The nature of the interaction depends upon the embodiment of the invention.

The interaction can be between the controller and a writer-printer pair. In this case, a single interaction between the writer and the controller, or the printer and the controller, causes a particular digital disc to be disposed for writing and printing of appropriate portions of the digital file group. The allocation can take a variety of forms in this embodiment; however, the overall effect is to place the controller, printer and writer in lock-step. For example, the printer can send a signal to the controller upon placement of a digital disc in a receiver. The controller can then send appropriate portions of the next digital file group in a queue to the writer and printer. The writer can retain program information in a buffer until printing is completed and the disc is moved by hand or automated machinery to the writer. The program information can then be written.

Lock-step between the controller, writer, and printer is not preferred, since writing is commonly much slower than printing and it is desirable, in some situations to gang or connect several writers to a single printer. In preferred methods of the invention, lock-step is avoided by decoupling the first allocating step and the second treatment (printing or writing) step.

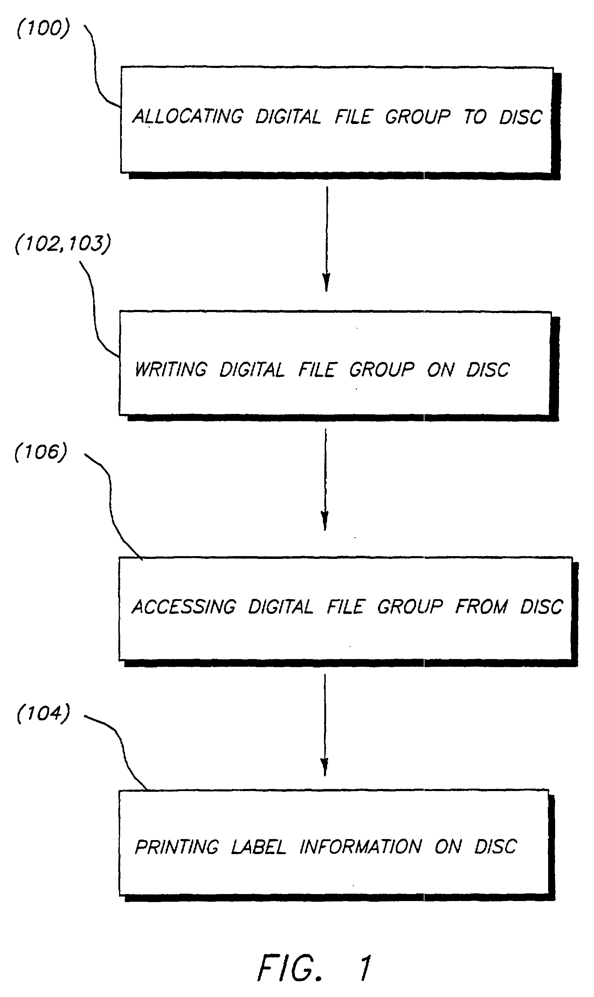

Referring now to Figs. 1 and 4, in a first preferred embodiment of the invention, lock-step is avoided by writing the digital file group 10 to the disc 11 before printing. In this embodiment, a placement of a disc 11 in the writer 13 causes an interaction between a controller 28 and the writer 13 and the allocation (100) of a digital file group to the disc 11. The controller 28 then causes the writer 13 to write (103) the allocated digital file group 10 on the disc 11. This step is inclusive of writing (102) the program information onto the disc 11. After the digital file group 10 has been written, the disc 11 is moved to the printer 15 and the digital file group 10 on the disc 11 is accessed (106) by the control unit 29. The disc 11 is read using a digital reader 30 and the label file group 16 is supplied from the disc 11 to the printer 15 via the control unit 29. The printer 15 then prints the label (not separately illustrated) on the disc 11. The control unit 29 can be a computing device like the controller 28 and can be part of the printer 15, a separate component, or a time-shared portion of the controller 28.

The printer 15 is illustrated as a print head mounted on an x-y plotter engine. This does not reflect a preference as to the type of printer. A wide variety of printing mechanisms can be used including conventional silk screen printing, impact printing, and ink jet printing.

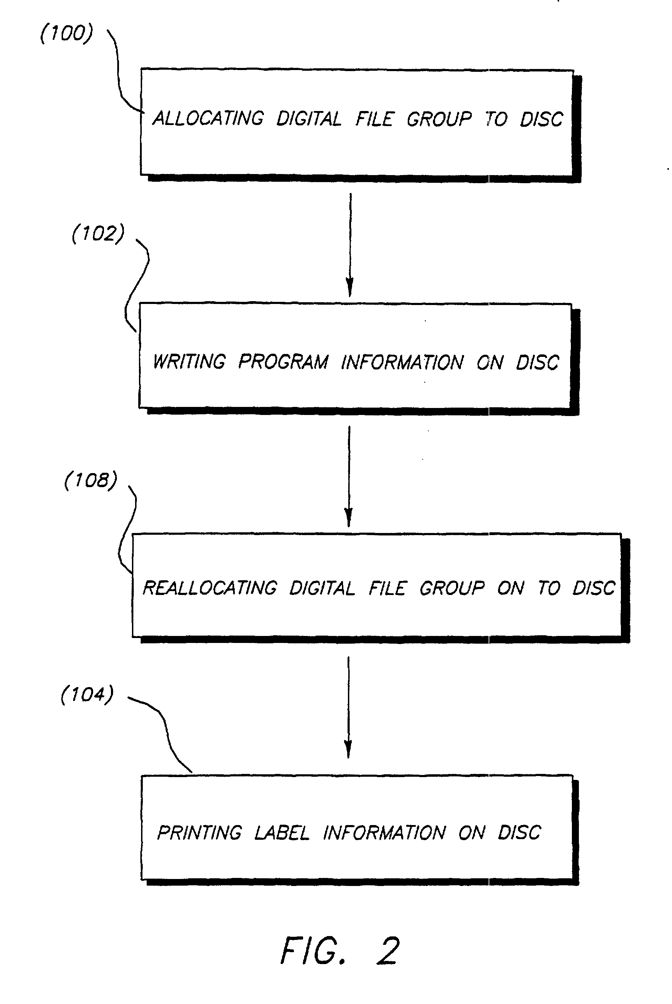

Referrring now to Figs. 2 and 5, in other preferred embodiments of the invention, there are allocation (100) and reallocation (108) steps representing separate interactions between the controller 28 and writer 13 and between the controller 28 and the printer 15. The allocation and reallocation require the controller to differentiate between a plurality of discs 11 and between a plurality of digital file groups 10.

In one such embodiment of the invention, a disc 11 bears a machine readable identification mark 32, such as a bar code. The identification mark 32 is read by an identification marking reader 34 and a digital representation of the mark is transmitted to the controller 28. The controller 28 then assigns the digital file group 10 to the disc 11 bearing the identification marking 32. The controller sends the program file group 14 to writer 13 which writes the program information on the disc 11. The disc 11 is later moved to the printer 15. The identification marking 32 is read by a second identification marking reader 34 and a digital representation of the mark is transmitted to the controller 28. The controller 28 then determines the appropriate digital file group 10 and reassigns the digital file group 10 to the disc 11 bearing the identification marking 32. The controller 28 sends label file group 14 to printer 15 which prints the label information on the disc 11. The order of writing and printing is not critical in this embodiment of the invention nor is the order of allocating (or reallocating) and writing or printing.

A visible identification mark 32, such as a bar code, is currently preferred, however, a digital identification code written on the disc 11 prior to or during the allocation, or some combination of visible and digital codes, could be used for the allocation and reallocation.

The embodiment of the apparatus 36 of the invention of Fig. 4 includes: a controller 28, a writer 13, a control unit 29, a digital reader 30, a printer 15, and signal paths 38 necessary for the operation of the various components. The embodiment of Fig. 5 includes: a controller 28, first and second identification marking readers 34, a writer 13, and a printer 15.

Devices for writing digital information on digital discs are well known to those skilled in the art. For example, a suitable digital writer for a writable optical disc is the Kodak™ PCD 600 CD Writer™ marketed by Eastman Kodak Company of Rochester, New York. A wide variety of printers can be used, however, in a preferred embodiment of the invention, the printer is a conventional ink jet printer. Digital readers, bar code readers and the like are well known to those skilled in the art. The mounting of components is largely a matter of design choice, however, in a preferred embodiment of the invention, the writer is physically isolated from the printer. The purpose of this isolation is to protect the writer from contamination with colorant or byproducts of the printing process. The simplest physical isolation is separation of the writer and printer by sufficient distance to prevent contamination. This is illustrated schematically in Figures 4-5. Movement of the disc 11 between writer and printer can be provided manually or by automatic equipment.

### Method and Apparatus

digital file group 10
digital disc 11
writer 13
program information 102
printer 15
label information 104
face 17
operational file group 12
program file group 14
label file group 16
control file group 18
identification marking file group 20
code/format file group 22,23
directory file group 24,25
data file group 26,27
controller 28
digital reader 30
control unit 29
identification mark 32
disc 11
apparatus 36
control unit 29
signal paths 38
first and second identification marking readers 34
writer 13

## Claims

1. A method for writing and labeling digital discs (11) comprising the steps of:
allocating a digital file group (10) to a disc (11), the digital file group having a program file group (14) and a label file group (16), the program file group (14) having digitized program information and control information (22, 24, 26) necessary to write the program information to the digital disc, the label file group (16) having digitized label information and control information (23, 25, 27) necessary to print the label information directly on the digital disc;
writing (102, 103) the digital file group on the digital disc, the writing being modulated by the program file group;
accessing (106) the digital file group from the digital disc; and
printing (104) the label information, from the accessed digital file group, directly on the digital disc, the printing being modulated by the label file group of the accessed digital file group.

2. Apparatus for writing and labeling a digital disc (11), comprising:
means (28) for allocating a program file group (14) having digitized program information and control information necessary to write the program information to the digital disc and a label file group (16) having digitized label information and control information necessary to print the label information on the digital disc;
a writer (13) for writing the digitized program information on the digital disc;
a printer (15) for printing the label information;
**characterized in that**:
the program file group (14) and label file group (16) are contained in a digital file group (10) which is written by the writer (13) on the digital disc, the writing being modulated by the program file group;
a digital reader (28, 29) for accessing the digital file group (10) from the digital disc (11); and
the printer (15) prints the label information, from the accessed digital file group (10), directly on the digital disc (11), the printing being modulated by the label file group (10) of the accessed digital file group, the printer being physically isolated from the writer.

## Patentansprüche

1. Verfahren zum Beschreiben und Beschriften digitaler Speicherplatten (11) mit folgenden Schritten:
- Zuweisen einer digitalen Dateigruppe (10) zu einer Speicherplatte (11), wobei die digitale Dateigruppe eine Programmdateigruppe (14) und eine Beschriftungsdateigruppe (16) aufweist, und die Programmdateigruppe (14) eine für die Aufzeichnung der Programminformation auf der Speicherplatte erforderliche digitalisierte Programminformation und Steuerungsinformation (22, 24, 26), und die Beschriftungsdateigruppe (16) eine für das direkte Bedrucken der Speicherplatte mit einer Beschriftungsinformation erforderliche digitalisierte Beschriftungsinformation und Steuerungsinformation (23, 25, 27) enthält;
- Schreiben (102, 103) der digitalen Dateigruppe auf die digitale Speicherplatte, wobei der Schreibvorgang durch die Programmdateigruppe moduliert wird;
- Öffnen (106) der digitalen Dateigruppe auf der digitalen Speicherplatte;
- Drucken (104) der Beschriftungsinformation aus der geöffneten digitalen Dateigruppe, unmittelbar auf die digitale Speicherplatte, wobei der Druckvorgang durch die Beschriftungsdateigruppe der geöffneten digitalen Dateigruppe moduliert wird.

2. Vorrichtung zum Beschreiben und Beschriften einer digitalen Speicherplatte (11) mit folgenden Komponenten:
- einer Einrichtung (28) zum Zuweisen einer Programmdateigruppe (14), welche eine für die Aufzeichnung einer Programminformation auf der Speicherplatte erforderliche digitalisierte Programminformation und Steuerungsinformation enthält, und einer Beschriftungsdateigruppe (16), welche eine für das Bedrucken der Speicherplatte mit einer Beschriftungsinformation erforderliche digitalisierte Beschriftungsinformation und Steuerungsinformation enthält;
- einem Aufzeichnungsgerät (13) zum Schreiben der digitalisierten Programminformation auf die digitale Speicherplatte;
- einem Drucker (15) zum Drucken der Beschriftungsinformation;
**dadurch gekennzeichnet, dass**
- die Programmdateigruppe (14) und die Beschriftungsdateigruppe (16) in einer digitalen Dateigruppe (10) enthalten sind, die durch das Aufzeichnungsgerät (13) auf die digitale Speicherplatte geschrieben wird, wobei der Schreibvorgang durch die Programmdateigruppe moduliert wird;
- ein Digitalleser (28, 29) zum Öffnen der digitalen Dateigruppe (10) auf der digitalen Speicherplatte (11) vorgesehen ist; und
- der Drucker (15) die Beschriftungsinformation aus der geöffneten digitalen Dateigruppe (10) unmittelbar auf die digitale Speicherplatte (11) druckt, wobei der Druckvorgang durch die Beschriftungsdateigruppe (16) der geöffneten digitalen Dateigruppe moduliert wird und der Drucker vom Aufzeichnungsgerät körperlich getrennt ist.

## Revendications

1. Procédé destiné à écrire et à étiqueter des disques numériques (11) comprenant les étapes :
allouer un groupe de fichiers numériques (10) à un disque (11), le groupe de fichiers numériques comportant un groupe de fichiers de programme (14) et un groupe de fichiers d'étiquette (16), le groupe de fichiers de programme (14) comportant des informations de programme numérisées et des informations de commande (22, 24, 26) nécessaires pour écrire les informations de programme sur le disque numérique, le groupe de fichiers d'étiquette (16) comportant des informations d'étiquette numérisées et des informations de commande (23, 25, 27) nécessaires pour imprimer les informations d'étiquette directement sur le disque numérique,
écrire (102, 103) le groupe de fichiers numériques sur le disque numérique, l'écriture étant modulée par le groupe de fichiers de programme,
accéder (106) au groupe de fichiers numériques depuis le disque numérique, et
imprimer (104) les informations d'étiquette, à partir du groupe de fichiers numériques auquel on accède, directement sur le disque numérique, l'impression étant modulée par le groupe de fichiers d'étiquette du groupe de fichiers numériques auquel on accède.

2. Appareil destiné à écrire et à étiqueter un disque numérique (11), comprenant :
un moyen (28) destiné à allouer un groupe de fichiers de programme (14) comportant des informations de programme numérisées et des informations de commande nécessaires pour écrire les informations de programme sur le disque numérique et un groupe de fichiers d'étiquette (16) comportant des informations d'étiquette numérisées et des informations de commande nécessaires pour imprimer les informations d'étiquette sur le disque numérique,
un dispositif d'écriture (13) destiné à écrire des informations de programme numérisées sur le disque numérique,
une imprimante (15) destinée à imprimer les informations d'étiquette,
**caractérisé en ce que** :
le groupe de fichiers de programme (14) et le groupe de fichiers d'étiquette (16) sont contenus dans un groupe de fichiers numériques (10) qui est écrit par le dispositif d'écriture (13) sur le disque numérique, l'écriture étant modulée par le groupe de fichiers de programme,
un lecteur numérique (28), (29) destiné à accéder au groupe de fichiers numériques (10) à partir du disque numérique (11), et
l'imprimante (15) imprime les informations d'étiquette à partir du groupe de fichiers numériques auquel on accède (10) directement sur le disque numérique (11), l'impression étant modulée par le groupe de fichiers d'étiquette (10) du groupe de fichiers numériques auquel on accède, l'imprimante étant physiquement isolée du dispositif d'écriture.
